# EUROPEAN PATENT APPLICATION

(11) **EP 4 579 871 A1**
(43) Date of publication of application: **02.07.2025**
(21) Application number: 24840139.0
(22) Date of filing: 12.07.2024
(51) Int. Cl.: H01M 10/42, A62C 3/16, A62C 31/02, A62C 35/10, H01M 10/04, H01M 50/211, H01M 50/249

(54) **BATTERY MODULE**

(30) Priority: 12.07.2023 KR 20230090626
(71) Applicant: LG Energy Solution, Ltd., Seoul 07335 (KR)
(72) Inventor: KANG, Dong-Min, Daejeon 34122 (KR)
(74) Representative: BCKIP Part mbB
(86) International application number: PCT/KR2024/010040
(87) International publication number: WO 2025/014329

(57) **Abstract**

Disclosed is a battery module. A battery module according to an embodiment of the present disclosure may include: a case configured to provide an inner space; a plurality of battery cells positioned inside the case and stacked in a left-right direction; an extinguishing tank positioned between the plurality of battery cells and the case and configured to provide an inner space; an extinguishing pipe communicating with the extinguishing tank and extending in the left-right direction; a spray nozzle communicating with the extinguishing pipe and protruding toward the plurality of battery cells; and a sealing member configured to seal the spray nozzle.

## Description

### TECHNICAL FIELD

The present disclosure relates to a battery module.

This application is based on and claims priority from Korean Patent Application No. 10-2023-0090626, filed on July 12, 2023, with the Korean Intellectual Property Office, the disclosure of which is incorporated herein in its entirety by reference.

### BACKGROUND ART

As the demand for portable electronic products such as laptops, video cameras, mobile phones, and the like rapidly increases, and as robots, electric vehicles, and the like are progressively commercialized, active researches on high-performance secondary batteries capable of being repeatedly charged and discharged are underway.

Currently commercialized secondary batteries include nickel-cadmium batteries, nickel-hydrogen batteries, nickel-zinc batteries, and lithium secondary batteries. Among them, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which positive and negative electrode plates, coated with the positive and negative electrode active materials, respectively, are disposed with a separator therebetween and an exterior case, i.e., a battery case, that stores and seals the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices for driving or energy storage, such as electric vehicles and energy storage systems (ESSs), as well as in small devices such as portable electronic devices. A plurality of secondary batteries described above may be electrically connected and stored inside a module case to form one battery module. In addition, multiple battery modules described above may be connected to configure one battery pack.

However, in the case where a large number of secondary batteries (battery cells) or a large number of battery modules are densely stored in a small space, they may be vulnerable to a thermal event. In particular, if an event such as thermal runaway occurs in any one battery cell, high-temperature gas, flame, and heat may be generated. If such gas, flame, or heat transfers to other battery cells included in the same battery module, an explosive chain reaction such as thermal propagation may occur. In addition, this chain reaction may cause accidents such as fire or explosion in other battery modules, as well as in the relevant battery module.

Moreover, since medium and large battery packs used in electric vehicles include a large number of battery cells and battery modules to increase output and/or capacity, the risk of a thermal chain reaction may be further increased. In addition, in the case of a battery pack mounted to an electric vehicle or the like, there may be users such as drivers nearby. Accordingly, if a thermal event occurring in a specific battery module fails to be controlled to lead to a chain reaction, it may cause significant property damage and casualties.

Therefore, when a thermal event occurs in a battery cell, immediate measures such as supply of an extinguishing agent are required.

### DISCLOSURE

### Technical Problem

The present disclosure aims to solve the problems described above and other problems.

The present disclosure also aims to provide a battery module capable of immediately supplying extinguishing agents in the event of a thermal event.

The present disclosure also aims to provide a battery module capable of minimizing the amount of extinguishing agent remaining in an extinguishing tank in the event of a thermal event.

### Technical Solution

In one aspect of the present disclosure, there is provided a battery module including: a case configured to provide an inner space; a plurality of battery cells positioned inside the case and stacked in a left-right direction; an extinguishing tank positioned between the plurality of battery cells and the case and configured to provide an inner space; an extinguishing pipe communicating with the extinguishing tank and extending in the left-right direction; a spray nozzle communicating with the extinguishing pipe and protruding toward the plurality of battery cells; and a sealing member configured to seal the spray nozzle.

In addition, the extinguishing pipe and the spray nozzle may be configured to be electrically insulating.

In addition, the sealing member may be configured to melt when a thermal event occurs.

In addition, the battery module may further include a pressing member positioned between the extinguishing tank and the case and configured to pressurize the extinguishing tank.

The battery module may further include an elastic member positioned between the pressing member and the case.

In addition, the extinguishing tank may be configured to be foldable.

In addition, the extinguishing tank may include: a rigid portion connected to the extinguishing pipe; and a flexible portion coupled to the rigid portion and made of a flexible material.

In addition, the pressing member may be configured to have a plate shape and to be in surface contact with the extinguishing tank.

In addition, the extinguishing pipe may include a first extinguishing pipe positioned in the front of the plurality of battery cells, and the spray nozzle may include a first spray nozzle protruding toward a terrace portion of the plurality of battery cells.

In addition, the extinguishing pipe may include a second extinguishing pipe located on a top of the plurality of battery cells, and the spray nozzle may include a second spray nozzle protruding toward a central portion of the plurality of battery cells.

In addition, the extinguishing tank may include: a first extinguishing tank located on a right side of the plurality of battery cells; and a second extinguishing tank located on a left side of the plurality of battery cells.

In addition, the spray nozzle may include a metal mesh provided at one end, and the sealing member may be configured to seal the metal mesh.

In addition, the spray nozzle may be configured as a plurality of nozzles, and the sealing member may be configured to seal the plurality of nozzles.

A battery pack according to one aspect of the present disclosure may include a battery module of the present disclosure.

A vehicle according to one aspect of the present disclosure may include a battery module of the present disclosure.

### Advantageous Effects

According to at least one of the embodiments of the present disclosure, when a thermal event occurs in a battery module, it is possible to immediately supply an extinguishing agent, thereby improving thermal safety.

According to at least one of the embodiments of the present disclosure, an extinguishing agent may be supplied so that the residual extinguishing agent is minimized in an extinguishing tank.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view illustrating a battery module according to an embodiment of the present disclosure.
FIG. 2 is a partially exploded view of the battery module in FIG. 1.
FIG. 3 is an enlarged view of a part of the configuration of FIG. 2.
FIG. 4 is a partially cross-sectional view schematically illustrating the configuration taken along line A-A' in FIG. 1.
FIG. 5 is a partially cross-sectional view schematically illustrating the configuration taken along line A-A' in FIG. 1 when a thermal event occurs.
FIG. 6 is a cross-sectional view illustrating the configuration taken along line A-A' in FIG. 1 according to a modified embodiment.
FIG. 7 is a cross-sectional view illustrating the configuration taken along line A-A' in FIG. 1 when a thermal event occurs according to a modified embodiment.
FIG. 8 is a drawing illustrating a part of the configuration of FIG. 2 according to a modified embodiment.
FIG. 9 is a cross-sectional view schematically illustrating the configuration taken along line A-A' in FIG. 1 according to a modified embodiment.
FIG. 10 is a drawing illustrating a spray nozzle of a battery module according to an embodiment of the present disclosure.
FIG. 11 is a drawing illustrating a spray nozzle of a battery module according to another embodiment of the present disclosure.
FIG. 12 is a drawing illustrating a spray nozzle of a battery module according to another embodiment of the present disclosure.
FIG. 13 is a drawing illustrating a spray nozzle of a battery module according to another embodiment of the present disclosure.
FIG. 14 is a drawing illustrating a spray nozzle of a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

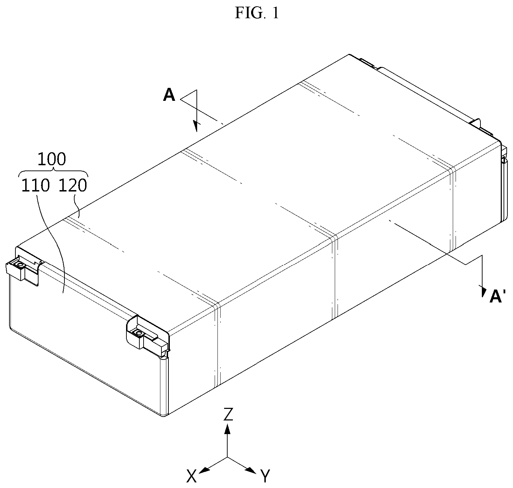

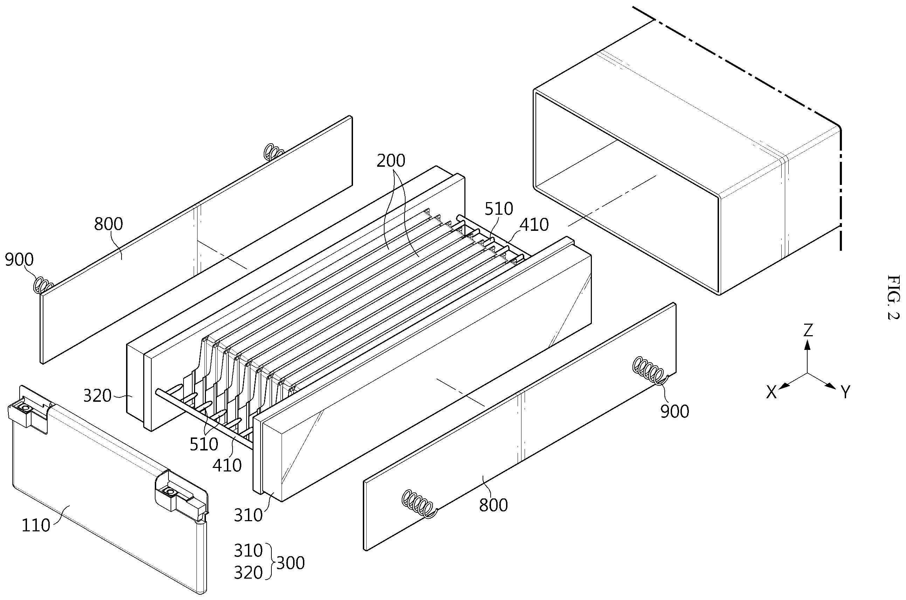

FIG. 1 is a perspective view illustrating a battery module according to an embodiment of the present disclosure. FIG. 2 is a partially exploded view of the battery module in FIG. 1. Referring to FIGS. 1 and 2, a battery module according to an embodiment of the present disclosure may include a case 100, a battery cell 200, an extinguishing tank 300, an extinguishing pipe 400, a spray nozzle 500, and a sealing member 700.

The case 100 may provide a space therein. The case 100 may have a cuboid shape. The case 100 may include a frame 120, a front cover 110, and a rear cover 130. The frame 120 may have a cuboid shape with front and rear openings. The frame 120 may be comprised of four side plates. The frame 120, the front cover 110, and the rear cover 130 may be configured as a plurality of parts. The plurality of parts may be fastened, coupled, welded, attached, or fixed to each other to form the case 100.

The battery cell 200 may be located inside the case 100. A plurality of battery cells 200 may be provided, and the plurality of battery cells 200 may be accommodated in the case 100. In this case, the battery cell 200 may indicate a secondary battery. In addition, the battery cell 200 may be a pouch-type battery cell 200. The battery cell 200 may have a cuboid or pouch shape. The plurality of battery cells 200 may be stacked on each other. The plurality of battery cells 200 may be stacked in the left-right direction or the Y-axis direction.

The extinguishing tank 300 may be located inside the case 100. The extinguishing tank 300 may provide an inner space. The extinguishing tank 300 may be positioned between the plurality of battery cells 200 and the case 100. For example, the extinguishing tank 300 may be positioned between the outermost battery cell 200 among the plurality of battery cells 200 and the side plate of the case 100. The extinguishing tank 300 may accommodate or may be filled with an extinguishing agent 600 therein. The extinguishing agent 600 may be configured as a liquid. For example, the extinguishing agent 600 may be configured as Novec 1230.

The extinguishing pipe 400 may communicate with the extinguishing tank 300. The extinguishing pipe 400 may extend long in the left-right direction, the Y-axis direction, or the stacking direction of the plurality of battery cells 200.

The spray nozzle 500 may communicate with the extinguishing pipe 400. Alternatively, the spray nozzle 500 may extend or protrude from the extinguishing pipe 400. The spray nozzle 500 may protrude toward the plurality of battery cells 200. A plurality of spray nozzles 500 may be provided. The respective spray nozzles 500 may protrude toward the plurality of battery cells 200. For example, each spray nozzle 500 may be provided to correspond to a single battery cell 200.

The sealing member 700 may seal the spray nozzle 500. The sealing member 700 may seal or cover a spray hole or end of the spray nozzle 500. For example, the sealing member 700 may be configured as a material such as paraffin.

According to this configuration of the present disclosure, when a thermal event occurs, the extinguishing agent 600 may be supplied to the battery cell 200. When a thermal event occurs, the sealing member 700 may melt due to ignition particles such as venting gas or sparks. As a result, the extinguishing agent 600 accommodated in the extinguishing tank 300 may be sprayed through the spray nozzle 500 in which the sealing member 700 melts. Therefore, the extinguishing agent 600 may be supplied quickly without electrical or mechanical control, thereby suppressing thermal propagation. As a result, the thermal safety of the battery module may be improved.

Referring to FIGS. 1 and 2, the extinguishing pipe 400 and the spray nozzle 500 of the battery module according to an embodiment of the present disclosure may be configured to be electrically insulating.

According to this configuration of the present disclosure, the electrical stability of the battery module may be improved.

Referring to FIGS. 1 and 2, the sealing member 700 of the battery module according to an embodiment of the present disclosure may be configured to melt when a thermal event occurs. As the sealing member 700 melts, the spray hole or end of the spray nozzle 500 may be opened.

According to this configuration of the present disclosure, when a thermal event occurs, the sealing member 700 may melt, so that the extinguishing agent 600 may be supplied to the battery cell 200. Therefore, the extinguishing agent 600 may be quickly supplied without electrical or mechanical control, thereby suppressing thermal propagation. As a result, the thermal safety of the battery module may be improved.

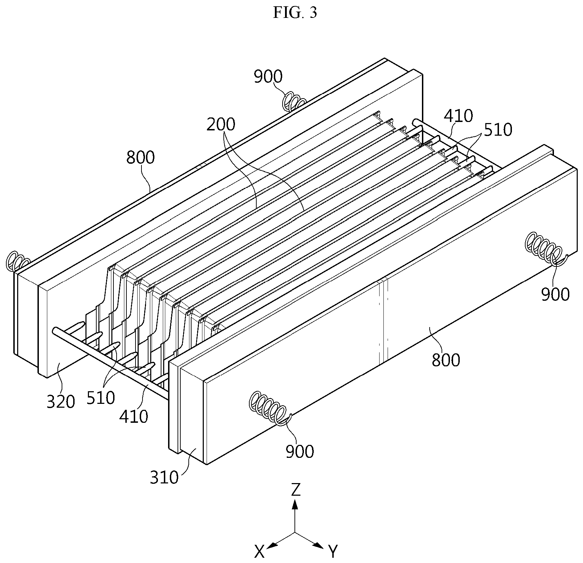

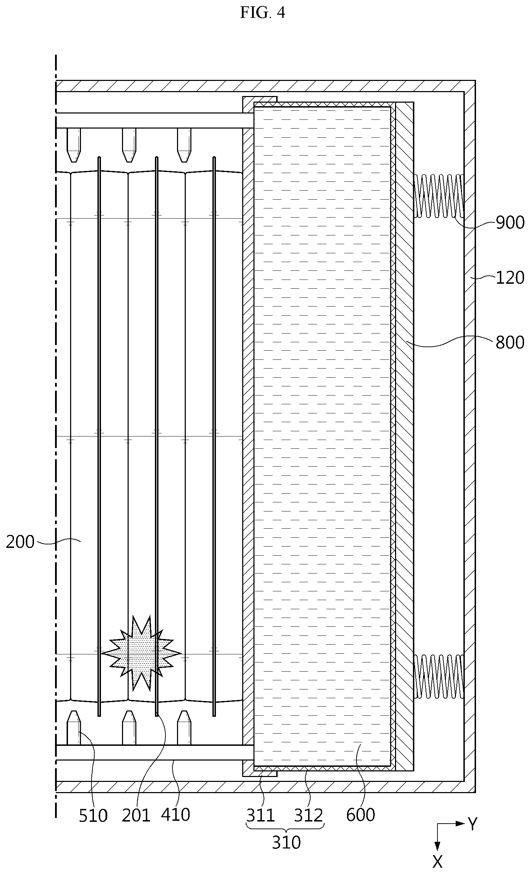

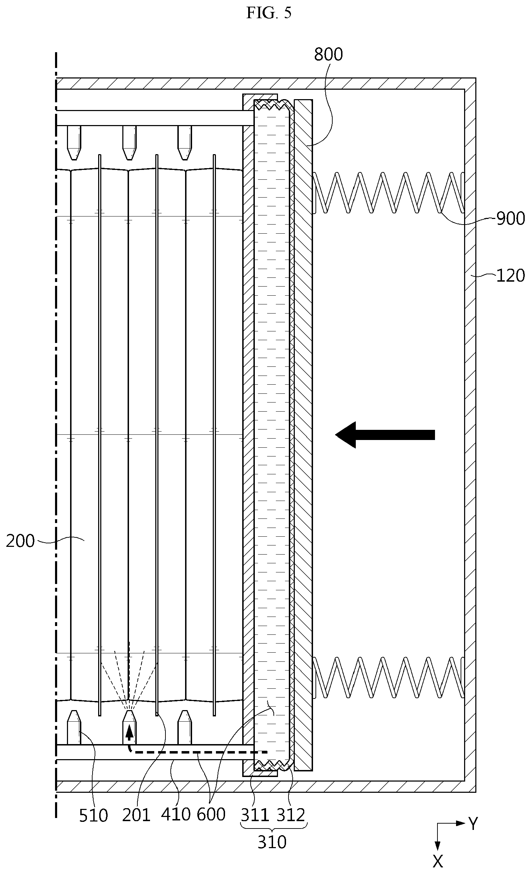

FIG. 3 is an enlarged view of a part of the configuration shown in FIG. 2. FIG. 4 is a partially cross-sectional view schematically illustrating the configuration taken along line A-A' in FIG. 1. FIG. 5 is a partially cross-sectional view schematically illustrating the configuration taken along line A-A' in FIG. 1 when a thermal event occurs. Referring to FIGS. 3 to 5, the battery module according to an embodiment of the present disclosure may further include a pressing member 800 positioned between the extinguishing tank 300 and the case 100 and configured to pressurize the extinguishing tank 300. The pressing member 800 may pressurize the extinguishing tank 300, regardless of whether or not the sealing member 700 melts. While the sealing member 700 seals the spray nozzle 500, even if the pressing member 800 pressurizes the extinguishing tank 300, the extinguishing agent 600 may not be supplied to the battery cell 200. On the other hand, if the sealing member 700 melts due to a thermal event so that the spray nozzle 500 is opened, the pressing member 800 may pressurize the extinguishing tank 300, so that the extinguishing agent 600 may be supplied to the battery cell 200.

According to this configuration of the present disclosure, when a thermal event occurs, the extinguishing agent 600 may be quickly supplied to the battery cell 200. Therefore, the extinguishing agent 600 may be quickly supplied without electrical or mechanical control, thereby suppressing thermal propagation. As a result, the thermal safety of the battery module may be improved.

Referring to FIGS. 3 to 5, the battery module according to an embodiment of the present disclosure may further include an elastic member 900 positioned between the pressing member 800 and the case 100. The elastic member 900 may be positioned between the pressing member 800 and the side plate of the case 100. For example, the elastic member 900 may be a spring 900. The spring 900 may remain in a compressed state between the pressing member 800 and the case 100. As a result, the restoring force of the spring 900 may act in a direction to push the pressing member 800 toward the extinguishing tank 300.

According to this configuration of the present disclosure, the elastic member 900 may provide restoring force to the pressing member 800, so that the extinguishing agent 600 may be quickly supplied to the battery cell 200. In addition, the elastic member 900 may appropriately maintain the pressurizing force of the pressing member 800 even if the supply of the extinguishing agent 600 is initiated.

Referring to FIGS. 3 to 5, the extinguishing tank 300 of the battery module according to an embodiment of the present disclosure may include a rigid portion 311 connected to the extinguishing pipe 400 and a flexible portion 312 coupled to the rigid portion 311 and made of a flexible material. The rigid portion 311 and the flexible portion 312 may form an inner space of the extinguishing tank 300. The flexible portion 312 may be fastened, attached, coupled, or fixed to the rigid portion 311. The flexible portion 312 may be contracted or folded by the pressing member 800 and the elastic member 900. In addition, the flexible portion 312 may be contracted or folded as the extinguishing agent 600 is supplied.

According to this configuration of the present disclosure, the flexible portion 312 may facilitate the supply of the extinguishing agent 600. As a result, the thermal safety of the battery module may be improved.

Referring to FIGS. 3 to 5, the pressing member 800 of the battery module according to an embodiment of the present disclosure may be configured to have a plate shape and be in surface contact with the extinguishing tank 300. The pressing member 800 may be in surface contact with one side of the extinguishing tank 300. In addition, the pressing member 800 may be in surface contact with the flexible portion 312 of the extinguishing tank 300. The pressing member 800 may transfer the restoring force of the elastic member 900 to the flexible portion 312. While the sealing member 700 seals the spray nozzle 500, the flexible portion 312 may be maintained without deformation. When a thermal event occurs, the spray nozzle 500 may be opened, and the pressing member 800 may fold, pressurize, move, or contract the flexible portion 312 toward the rigid portion 311.

According to this configuration of the present disclosure, the flexible portion 312 and the pressing member 800 may quickly and easily supply the extinguishing agent 600. In addition, the extinguishing agent 600 may be supplied so that the residual extinguishing agent 600 is minimized in the extinguishing tank 300. As a result, the thermal safety of the battery module may be improved.

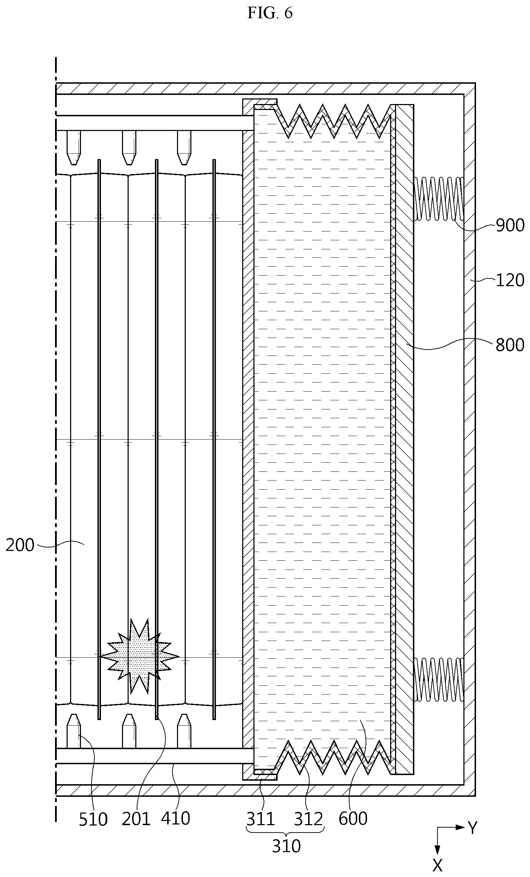

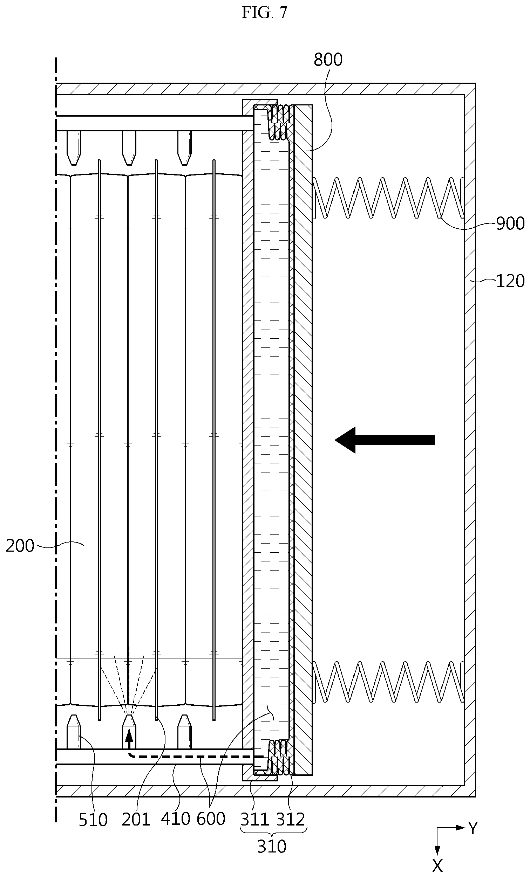

FIG. 6 is a cross-sectional view illustrating the configuration taken along line A-A' in FIG. 1 according to a modified embodiment. FIG. 7 is a cross-sectional view illustrating the configuration taken along line A-A' in FIG. 1 when a thermal event occurs according to a modified embodiment. Referring to FIG. 6 and FIG. 7, an extinguishing tank 300 of a battery module according to an embodiment of the present disclosure may be configured to be foldable. The extinguishing tank 300 may be configured in a wrinkled structure. When the extinguishing tank 300 is filled with the extinguishing agent 600, the extinguishing tank 300 may remain in the state in which the wrinkles are unfolded. When the extinguishing agent 600 is supplied, the wrinkles of the extinguishing tank 300 may be folded by the pressing member 800.

According to this configuration of the present disclosure, the folding or contraction of the extinguishing tank 300 may be easily performed. As a result, the supply of the extinguishing agent 600 may be performed quickly and easily. Therefore, the thermal safety of the battery module may be improved.

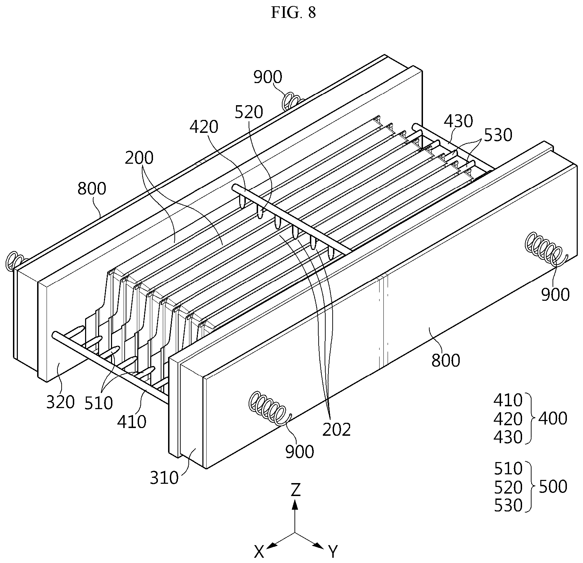

FIG. 8 is a drawing illustrating a part of the configuration of FIG. 2 according to a modified embodiment. Referring to FIG. 8, an extinguishing pipe 400 of a battery module according to an embodiment of the present disclosure may include a first extinguishing pipe 410 positioned in the front of a plurality of battery cells 200, and a spray nozzle 500 may include a first spray nozzle 510 protruding toward a terrace portion 201 of the plurality of battery cells 200. The first extinguishing pipe 410 and the first spray nozzle 510 may be positioned apart from the battery cells 200. The first spray nozzle 510 may be positioned adjacent to the terrace portion 201 of the battery cells 200.

According to this configuration of the present disclosure, when a thermal event occurs, the first spray nozzle 510 may be exposed to venting gas or ignitable particles. As a result, the sealing member 700 may melt, so that the extinguishing agent 600 may be sprayed.

Referring to FIG. 8, the extinguishing pipe 400 of the battery module according to an embodiment of the present disclosure may include a second extinguishing pipe 420 positioned on the top of the plurality of battery cells 200, and the spray nozzle 500 may include a second spray nozzle 520 protruding toward the upper central portion 202 of the plurality of battery cells 200. The second extinguishing pipe 420 and the second spray nozzle 520 may be positioned apart from the battery cells 200. The second spray nozzle 520 may be positioned adjacent to the upper terrace portion 201 of the battery cells 200.

According to this configuration of the present disclosure, when a thermal event occurs, the second spray nozzle 520 may be exposed to venting gas or ignitable particles. As a result, the sealing member 700 may melt, so that the extinguishing agent 600 may be sprayed.

Referring to FIG. 8, the extinguishing pipe 400 of the battery module according to an embodiment of the present disclosure may include a third extinguishing pipe 430 positioned in the rear of the plurality of battery cells 200, and the spray nozzle 500 may include a third spray nozzle 530 protruding toward the terrace portion 201 of the plurality of battery cells 200. The third extinguishing pipe 430 and the third spray nozzle 530 may be positioned apart from the battery cell 200. The third spray nozzle 530 may be positioned adjacent to the terrace portion 201 of the battery cells 200. In addition, the first extinguishing pipe 410, the second extinguishing pipe 420, and the third extinguishing pipe 430 may be collectively referred to as the extinguishing pipe 400. In addition, the first spray nozzle 510, the second spray nozzle 520, and the third spray nozzle 530 may be collectively referred to as the spray nozzle 500.

According to this configuration of the present disclosure, when a thermal event occurs, the third spray nozzle 530 may be exposed to venting gas or ignitable particles. As a result, the sealing member 700 may melt, so that the extinguishing agent 600 may be sprayed.

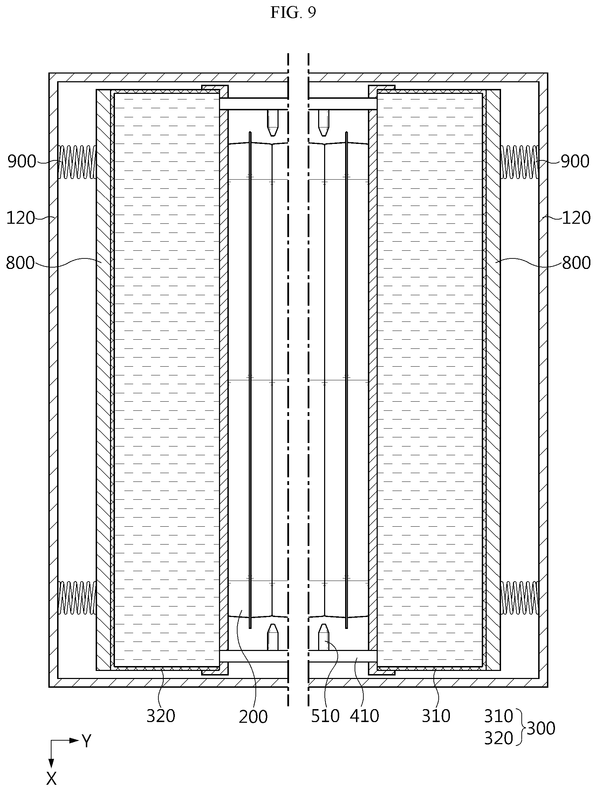

FIG. 9 is a cross-sectional view schematically illustrating the configuration taken along line A-A' in FIG. 1 according to a modified embodiment. Referring to FIG. 9, an extinguishing tank 300 of a battery module according to an embodiment of the present disclosure may include a first extinguishing tank 310 located on the right side of the plurality of battery cells 200 and a second extinguishing tank 320 located on the left side of the plurality of battery cells 200. The first extinguishing tank 310 and the second extinguishing tank 320 may communicate with each other through an extinguishing pipe 400. The first extinguishing tank 310 and the second extinguishing tank 320 may be pressurized by a pressing member 800, respectively.

According to this configuration of the present disclosure, the amount of extinguishing agent 600 accommodated in the battery module may be increased. As a result, the thermal safety of the battery module may be improved.

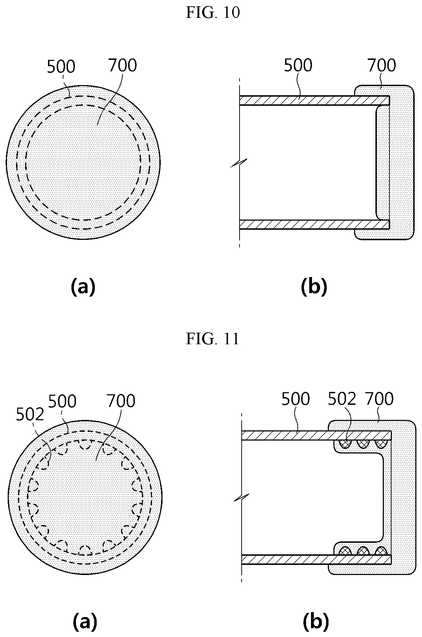

FIG. 10 is a drawing illustrating a spray nozzle 500 of a battery module according to an embodiment of the present disclosure. FIG. 10(a) is a front view of a spray hole of the spray nozzle 500, and FIG. 10(b) is a side view of the spray nozzle 500. Referring to FIG. 10, the spray hole or one end of the spray nozzle 500 of the battery module according to an embodiment of the present disclosure may be sealed with a sealing member 700. The sealing member 700 may seal the spray hole of the spray nozzle 500 and at least a portion of the side of the spray nozzle 500. In addition, at least a portion of the sealing member 700 may be located inside the spray nozzle 500.

According to this configuration of the present disclosure, unless a thermal event occurs, the sealing member 700 may stably seal the spray nozzle 500. As a result, the thermal safety of the battery module may be improved.

FIG. 11 is a drawing illustrating a spray nozzle 500 of a battery module according to another embodiment of the present disclosure. FIG. 11(a) is a front view of a spray hole of the spray nozzle 500, and FIG. 11(b) is a side view of the spray nozzle 500. Referring to FIG. 11, the spray nozzle 500 of the battery module according to an embodiment of the present disclosure may include an unevenness 502 formed on the inner side thereof. In addition, at least a part of the sealing member 700 may be located inside the spray nozzle 500 so as to be coupled, attached, or fixed to the unevenness 502.

According to this configuration of the present disclosure, the bonding force may be increased between the sealing member 700 and the spray nozzle 500. As a result, the sealing member 700 may stably seal the spray nozzle 500.

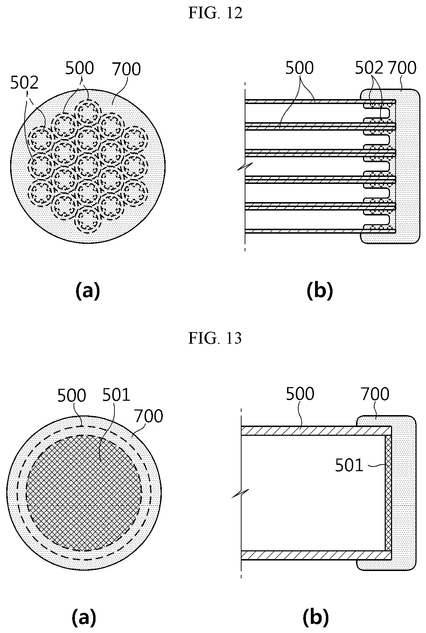

FIG. 12 is a drawing illustrating a spray nozzle 500 of a battery module according to another embodiment of the present disclosure. FIG. 12(a) is a front view of a spray hole of the spray nozzle 500, and FIG. 12(b) is a side view of the spray nozzle 500. Referring to FIG. 12, the spray nozzle 500 according to an embodiment of the present disclosure may be configured as a plurality of nozzles. In addition, each of the plurality of nozzles may include an unevenness 502 formed on the inner side thereof. The sealing member 700 may seal all of the plurality of nozzles. In addition, at least a portion of the sealing member 700 may be located inside the plurality of nozzles so as to be coupled, attached, or fixed to the unevenness 502.

According to this configuration of the present disclosure, since the spray holes of the plurality of nozzles are formed small, the bonding force may be increased between the sealing member 700 and the plurality of nozzles. Therefore, the sealing member 700 may stably seal the plurality of nozzles.

FIG. 13 is a drawing illustrating a spray nozzle 500 of a battery module according to another embodiment of the present disclosure. FIG. 13(a) is a front view of a spray hole of the spray nozzle 500, and FIG. 13(b) is a side view of the spray nozzle 500. Referring to FIG. 13, the spray nozzle 500 of the battery module according to an embodiment of the present disclosure may include a metal mesh 501 provided at one end thereof, and the sealing member 700 may seal the metal mesh 501. In addition, at least a portion of the sealing member 700 may be positioned inside the spray nozzle 500 so as to be coupled, attached, or fixed to the metal mesh 501.

According to this configuration of the present disclosure, the bonding force between the sealing member 700 and the spray nozzle 500 may be increased. As a result, the sealing member 700 may stably seal the spray nozzle 500.

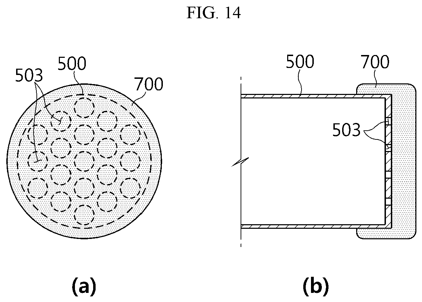

FIG. 14 is a drawing illustrating a spray nozzle 500 of a battery module according to another embodiment of the present disclosure. FIG. 14(a) is a front view of a spray hole of the spray nozzle 500, and FIG. 14(b) is a side view of the spray nozzle 500. Referring to FIG. 14, the spray nozzle 500 of the battery module according to an embodiment of the present disclosure may have a plurality of holes 503 provided at one end. The sealing member 700 may seal the plurality of holes 503. In addition, at least a part of the sealing member 700 may be located inside the spray nozzle 500 so as to be coupled, attached, or fixed to the plurality of holes 503.

According to this configuration of the present disclosure, the bonding force between the sealing member 700 and the spray nozzle 500 may be increased. Therefore, the sealing member 700 may stably seal the spray nozzle 500.

A battery pack according to the present disclosure may include the battery module according to the present disclosure described above. In addition, the battery pack according to the present disclosure may further include various components, in addition to the battery module according to the present disclosure described above, for example, components of the battery pack known at the time of filing the present disclosure, such as a BMS, a bus-bar, a pack case, a relay, a current sensor, and the like.

A vehicle according to the present disclosure may include the battery module according to the present disclosure described above. The battery module according to the present disclosure may be applied to vehicles such as electric vehicles or hybrid vehicles. In addition, the vehicle according to the present disclosure may further include various other components included in the vehicle, such as a car body, a motor, a control device such as an ECU (electronic control unit), and the like, in addition to the battery module.

Meanwhile, although terms indicating directions such as upward, downward, left, right, front, and back are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a case configured to provide an inner space;
a plurality of battery cells positioned inside the case and stacked in a left-right direction;
an extinguishing tank positioned between the plurality of battery cells and the case and configured to provide an inner space;
an extinguishing pipe communicating with the extinguishing tank and extending in the left-right direction;
a spray nozzle communicating with the extinguishing pipe and protruding toward the plurality of battery cells; and
a sealing member configured to seal the spray nozzle.

2. The battery module according to claim 1,
wherein the extinguishing pipe and the spray nozzle are configured to be electrically insulating.

3. The battery module according to claim 1,
wherein the sealing member is configured to melt when a thermal event occurs.

4. The battery module according to claim 1,
further comprising a pressing member positioned between the extinguishing tank and the case and configured to pressurize the extinguishing tank.

5. The battery module according to claim 4,
further comprising an elastic member positioned between the pressing member and the case.

6. The battery module according to claim 4,
wherein the extinguishing tank is configured to be foldable.

7. The battery module according to claim 4,
wherein the extinguishing tank comprises:
a rigid portion connected to the extinguishing pipe; and
a flexible portion coupled to the rigid portion and made of a flexible material.

8. The battery module according to claim 4,
wherein the pressing member is configured to have a plate shape and to be in surface contact with the extinguishing tank.

9. The battery module according to claim 1,
wherein the extinguishing pipe comprises a first extinguishing pipe positioned in the front of the plurality of battery cells, and
wherein the spray nozzle comprises a first spray nozzle protruding toward a terrace portion of the plurality of battery cells.

10. The battery module according to claim 1,
wherein the extinguishing pipe comprises a second extinguishing pipe located on a top of the plurality of battery cells, and
wherein the spray nozzle comprises a second spray nozzle protruding toward a central portion of the plurality of battery cells.

11. The battery module according to claim 1,
wherein the extinguishing tank comprises:
a first extinguishing tank located on a right side of the plurality of battery cells; and
a second extinguishing tank located on a left side of the plurality of battery cells.

12. The battery module according to claim 1,
wherein the spray nozzle comprises a metal mesh provided at one end, and
wherein the sealing member is configured to seal the metal mesh.

13. The battery module according to claim 1,
wherein the spray nozzle is configured as a plurality of nozzles, and
wherein the sealing member is configured to seal the plurality of nozzles.

14. A battery pack comprising a battery module according to any one of claims 1 to 10.

15. A vehicle comprising a battery module according to any one of claims 1 to 10.
